# EUROPÄISCHE PATENTSCHRIFT

(11) **EP 1 651 379 B1**
(45) Veröffentlichungstag und Bekanntmachung des Hinweises auf die Patenterteilung: **08.09.2010**
(21) Anmeldenummer: 04763595.8
(22) Anmeldetag: 29.07.2004
(51) Int. Cl.: B23K 20/12, F16D 1/068, B23K 33/00

(54) **FÜGESTELLENSTRUKTUR FÜR EIN REIBSCHWEISSVERFAHREN UND VERFAHREN ZUM FÜGEN**
JOINT-SITE STRUCTURE FOR A FRICTION WELDING METHOD AND WELDING METHOD
STRUCTURE DE SITE DE LIAISON POUR UN PROCEDE DE SOUDAGE PAR FRICTION ET PROCEDE DE SOUDAGE PAR FRICTION

(30) Priorität: 09.08.2003 DE 10336668
(43) Veröffentlichungstag der Anmeldung: 03.05.2006
(73) Patentinhaber: Daimler AG, 70327 Stuttgart (DE)
(72) Erfinder: JUTZ, Bernhard, 71576 Burgstetten (DE); REINHARDT, Rudolf, 73732 Esslingen (DE); ROHRBERG, Uwe, 71384 Weinstadt (DE); SCHLAUCH, Patrick, 72762 Reutlingen (DE); ZECHMANN, Hans, 71394 Kernen (DE)
(74) Vertreter: JENSEN & SON
(86) Internationale Anmeldenummer: PCT/EP2004/008490
(87) Internationale Veröffentlichungsnummer: WO 2005/014222

(56) Entgegenhaltungen:
- DE-C- 19 934 855
- DE-U- 29 905 633
- GB-A- 1 475 678
- PATENT ABSTRACTS OF JAPAN Bd. 2003, Nr. 12, 5. Dezember 2003 (2003-12-05) & JP 2004 138209 A (DAIHATSU MOTOR CO LTD), 13. Mai 2004 (2004-05-13)

## Beschreibung

Die Erfindung betrifft eine Fügestellenstruktur und ein Verfahren nach den Oberbegriffen der Ansprüche 1 und 9.

Im Fahrzeugbau werden in zahlreichen Anwendungen Verbundwerkstücke eingesetzt, die aus einer Welle und einem im wesentlichen rotationssymmetrischen Nabenteil zusammengesetzt sind. Beispiele für Scheiben sind Getriebe- und Kupplungsteile oder auch scheibenförmige Rohlinge, die noch mechanisch bearbeitet werden müssen.

Es ist bekannt, eine Welle und Nabenteil in einem Verbindungsbereich durch Reibschweißen zu verbinden. Herkömmlicherweise wird dabei eine Stirnseite der Welle mit einer Stirnseite des Nabenteils verschweißt. Alternativ hierzu können Welle und Nabenteil mit Hilfe des aufgleitenden Reibschweißens verbunden werden; dabei handelt es sich um eine Variante des Pressschweißens, bei dem im Gegensatz zum konventionellen stirnseitigen Reibschweißen die Fügeflächen am Umfang der Bauteile angeordnet sind. Dabei wird z.B. eine Welle mit einem Nabenteil mit Überdeckung verschweißt, indem eines der beiden Bauteil in Rotation versetzt und auf das andere, in Ruhe befindliche, Gegenstück aufgepresst wird. Der Schweißprozess beginnt an den Berührflächen der Bauteile. Nach der Plastifizierung des dort befindlichen Materials durch die Reibwärme entsteht nach dem Ende der Rotationsbewegung eine unlösbare Verbindung.

In der DE 199 34 855 C1 ist ein reibgeschweißtes Welle/ Scheibe- Verbundwerkstück gezeigt, das aus einer Scheibe mit Durchgangsloch und einer Welle mittels aufgleitendem Reibschweißen gefügt ist. Beim Verschweißen von Welle und Scheibe entstehen ringförmige Verbindungsabschnitte, zwischen denen ringförmige Hohlräume gebildet werden. Durch die radial und axial zueinander versetzten Fügestellen wird eine Gewichtsverringerung des Gesamtteils erreicht, wobei die Hohlräume zur z.B. Ölführung genutzt werden können.

Wird ein Nabenteil einer Scheibe mit einer Welle mittels aufgleitendem Reibschweißen gefügt, können beim Aufschieben des Nabenteils auf die kalte Welle beim Reibschweißen Fehlstellen entstehen, die Kerben und Risse zur Folge haben können.

Aufgabe der Erfindung ist es, eine neue Gestaltung der Fügestelle für ein Welle/Scheibe- Verbundwerkstück anzugeben, mit der Fehlstellen minimiert und die Festigkeitswerte der Verbindung erhöht werden. Weiterhin liegt der Erfindung die Aufgabe zugrunde, ein Verfahren zur Herstellung der Fügestelle anzugeben.

Die Aufgabe wird erfindungsgemäß durch die Merkmale der Ansprüche 1 und 9 gelöst. Vorteilhafte Ausgestaltungen sind den Unteransprüchen zu entnehmen.

Gemäß der Erfindung ist die Fügestellenstruktur eines Welle/Nabe-Verbundwerkstücks, insbesondere für das Verbinden von einer Welle mit einem Verbindungsflansch eines Nabenteils eines Antriebsrades mittels Reibschweißen, in einer solchen Weise gestaltet, dass zwischen der Welle und dem Verbindungsflansch des Nabenteils vor und hinter der Fügestelle ein definierter Spalt eingebracht ist, der das beim Reibschweißen erweichte Material in seiner Ausbreitung behindert und bei dem die Höhe des Spalts so dimensioniert ist, dass das Verbundwerkstück vor und hinter der Fügestelle eine verbreiterte Bindezone aufweist.

Bevor die Fügepartner mittels aufgleitendem Reibschweißen miteinander verbunden werden, liegen zwischen Welle und Nabenteil somit ringförmige Hohlräume ("Spalte") vor, die während dem Reibschweißen einerseits das erweichte, aus dem Fügebereich verdrängte Material aufnehmen, andererseits - aufgrund ihrer geringen lichten Höhe - dieses erweichte Material aber in seiner Ausbreitung hemmen. Je mehr Material in Zuge der Stauchphase des Reibschweißens in die Hohlräume gepresst wird, desto weiter wird es innerhalb der Hohlräume - von der eigentlichen Fügestelle ausgehend - in kühlere Nachbarbereiche der heißen Fügestelle gedrängt. In diesen kühleren Nachbarbereichen verfestigt sich das verdrängte Material aufgrund der niedrigeren Umgebungstemperatur etwas, bekommt dabei eine teigigere Konsistenz und behindert aufgrund seiner höheren Viskosität die Ausbreitung des nachdrängenden Materials. Dadurch wird in den Hohlräumen ein Staudruck aufgebaut, der eine hohe Dichte des in die Spalte gepressten Materials zur Folge hat. Dies stellt einen grundsätzlichen Unterschied dar zum konventionellen aufgleitenden Reibschweißen, bei dem das teigige Material in Form eines Wulstes frei aus der Fügestelle entweichen kann.

Da die Spalte zwischen Welle und Nabenteil im Zuge des Reibschweißvorgangs (zumindest teilweise) mit teigigem, aus dem Fügebereich verdrängtem Material angefüllt werden, besitzt das Verbundwerkstück eine verbreiterte Bindezone. So entsteht beispielsweise bei einer Reiblänge von etwa 6 mm und einer lichten Höhe des Spalts von 1,5 mm eine axiale Erstreckung der Bindezone von etwa 10 mm. Durch diese axiale Verbreiterung der Bindezone wird die Festigkeit der Verbindung erheblich erhöht, da das in die Spalte hineingedrängte Material zur Verschweißung der Fügepartner beiträgt.

Eine solche, bei Verwendung des erfindungsgemäßen Verfahrens auftretende festigkeitserhöhende Verbreiterung der Bindezone kann bei Verwendung des herkömmlichen aufgleitenden Reibschweißens nicht erreicht werden: Um beim herkömmlichen aufgleitenden Reibschweißen die Bindezone zwischen den Fügepartnern zu verbreitern, müsste man nämlich ein erhöhtes Abmaß vorsehen und die Fügepartner dann entsprechend stärker stauchen, um die gewünschte erhöhte axiale Überdeckung zu erreichen. Mit dieser stärkeren Stauchung würde jedoch eine Erhöhung der Fehlstellen einhergehen, durch die die Festigkeit der Verbindung verringert würde. - Die Tatsache, dass sich durch die erfindungsgemäße Gestaltung der Fügepartner die effektive Bindezone in der beschriebenen Weise erheblich verbreitern lässt und dabei eine Erhöhung der Festigkeit erreicht wird, stellt somit einen überraschenden Effekt dar.

Der Vorsprung oder Übersprung aufgrund des herausgedrückten Materials an der Fügestelle wird vorzugsweise nach dem Reibschweißen spanend bearbeitet, um eine Verrundung zu erreichen.

In einer vorteilhaften Ausgestaltung der Erfindung werden zwischen Welle und Nabenteil mehrere axial zueinander versetzte Fügestellen vorgesehen. Dabei ist es für die Selbstzentrierung und relative axiale Ausrichtung der Fügepartner während des Reibschweißens vorteilhaft, die Fügestellen der Fügepartner in einer solchen Weise axial und radial gegeneinander zu versetzen, dass die Fügestellen auf dem Verbundwerkstück nach der Verschweißung in einem Winkelbereich zwischen 10° - 20°, bevorzugt 15°, zueinander angeordnet sind. Das entstehende Verbundwerkstück ist dann zylindersymmetrisch.

Im Unterschied zum stirnseitigen Reibschweißen der Welle mit dem Nabenteil, bei dem durch unsymmetrische Schrumpfen des Nabenteils nach dem Reibschweißen ein konischer Verzug des Nabenteils auftreten kann, ist das erfindungsgemäße Verfahren mit keinerlei konischen Verzügen der Fügepartner verbunden; die ursprüngliche Zylindersymmetrie der beiden Fügepartner bleibt also im Verbundwerkstück mit hoher Genauigkeit erhalten.

Zur Herstellung der erfindungsgemäßen Fügestellenstruktur müssen auf mindestens einem der beiden Fügepartner Hinterschnitte in Radialrichtung vorgesehen werden. Vorteilhafterweise werden alle für die Ausbildung der Fügestelle notwendigen Hinterschnitte auf der Welle angebracht, so dass der Verbindungsflansch des Nabenteils keine Hinterschnitte aufweist. Dies ist herstellungstechnisch besonders preisgünstig, da das Einbringen von Hinterschneidungen bei der spanenden Bearbeitung der Welle mit keinem Zusatzaufwand verbunden ist und zur Herstellung des Nabenteils ein gestuftes Werkzeug eingesetzt werden kann, mit Hilfe dessen die Innenbearbeitung des Nabenteils in einem einzigen Prozessschritt erfolgt.

Welle und Nabenteil können aus unterschiedlichen Werkstoffen bestehen. Insbesondere kann eine gehärtete Welle verwendet werden, und/oder das Nabenteil kann fertig bearbeitet (gehärtet, geschliffen etc.) sein.

Befindet sich der Fügebereich in der Nähe eines hochbelasteten Bereichs des Verbundwerkstücks, z.B. eines Lagers, so kann es vorteilhaft sein, die Welle und die Nabe so zu gestalten, dass die Fügestelle radial nach außen verlegt ist, so dass der hochbelastete Bereich vollkommen frei ist von Einflüssen der Fügestelle.

Die Spalthöhen der Fügestellen werden in einer solchen Weise auf den jeweiligen Anwendungsfall optimiert, dass der Durchmesser der Fügestelle, die radiale Überdeckung und die Werkstoffe der zu verbindenden Bauteile aufeinander abgestimmt sind. Bei einer Welle mit einem Durchmesser von 60 mm wurden beispielsweise mit einem Spaltmaß von 1,5 mm und einer radialen Überdeckung der zu verbindenden Bauteile im Bereich von 1,5 - 2,5 mm, bevorzugt 2 mm, gute Fügeergebnisse erzielt.

Im folgenden wird die Erfindung anhand eines in den schematischen Zeichnungen dargestellten Ausführungsbeispiels beschrieben. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
- Fig. 1a, 1b: zeigen ein Welle/Scheibe- Verbundwerk- stück mit einstufigem Verbindungsflansch
- Fig. 2a, 2b, 2c: zeigt die Strukturierung der Fügestelle eines einstufigem Verbindungsflansches
- Fig. 3: zeigt ein Welle/Scheibe Verbundwerkstück mit zweistufigem Verbindungsflansch

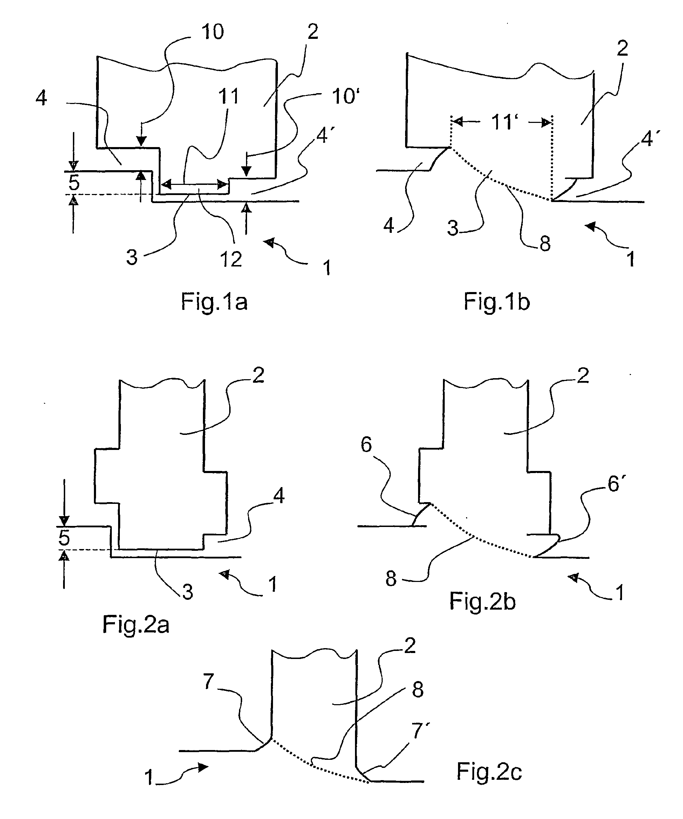

Gemäß Fig. 1a wird eine Welle 1, z.B. eine Kurbelwelle, mit einer Scheibe, z.B. einem Nabenteil eines Antriebsrads mit einem Verbindungsflansch 2, verbunden. Durch stirnseitige Fortsätze auf der Vorder- und Hinterseite des Verbindungsflansches 2 werden vor und hinter der Fügestelle 3 zwischen Welle 1 und Verbindungsflansch 2 je ein definierter Spalt 4, 4' mit lichter Höhe 10, 10' eingebracht. In Zusammenbaulage der Welle 1 mit dem Verbindungsflansch 2 bilden diese Spalte 4, 4' ringförmige Hohlräume. Die radiale Überdeckung 5 von Welle 1 und Verbindungsflansch 2 beträgt beispielsweise 2 mm. Durch das Reibschweißen versucht das erwärmte, weiche Material aus der Fügestelle 3 auszutreten, wird aber in radialer Richtung durch den Spalt 4, 4' daran gehindert. Dies führt zu einer Bindezone 8 zwischen Welle 1 und Verbindungsflansch 2, deren effektive Breite 11' vergrößert ist gegenüber der Breite 11 eines auf dem Verbindungsflansch 2 an der Fügestelle 3 ursprünglich vorgesehenen Stegs 12. In Fig. 2 ist die Strukturierung der Fügestelle eines einstufigen Verbindungsflansches dargestellt. Nach dem Reibschweißen entsteht ein Vorsprung oder Übersprung 6, 6' des Materials an der Fügestelle, der z.B. nach dem Reibschweißen spanend bearbeitet wird, um eine Verrundung 7, 7' zu erreichen.

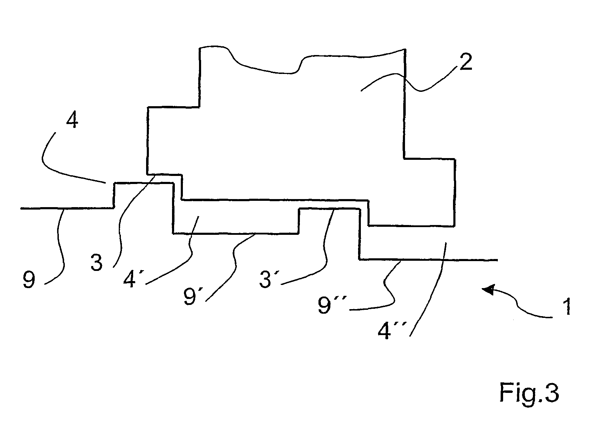

Fig. 3 zeigt einen zweistufigen Verbindungsflansch 2. Zwischen der Welle 1 und dem Verbindungsflansch 2 ist in Axialrichtung vor und hinter den Fügestellen 3, 3' je ein Spalt 4, 4', 4" vorgesehen. Der Spalt 4', in den während des Reibschweißens erweichtes Material aus beiden Fügestellen 3, 3' eindringt, ist bezügliche seiner Höhe und Länge so dimensioniert, dass das aus der Fügestelle 3 verdrängte Material den Materialfluss aus Fügestelle 3' nicht behindert. Der zweistufige Verbindungsflansch 2 des Nabenteils weist in diesem Ausführungsbeispiel keinerlei Hinterschnitte in Radialrichtung auf; die für die Ausbildung der Fügestellen 3, 3' notwendigen Hinterschnitte 9, 9', 9" sind alle auf der Welle 1 angebracht.

Die erfindungsgemäße Fügestellenstruktur wird z.B. bei der Verbindung einer Kurbelwelle mit einem Antriebsrad verwendet.

Zur Herstellung eines Verbundwerkstücks einer Kurbelwelle 1 für ein Kraftfahrzeug mit einem Verbindungsflansch 2 eines Nabenteils eines Antriebsrades wird zunächst eine einteilige Nabeneinheit - umfassend das Nabenteil des Antriebsrads und den Verbindungsflansch - hergestellt. Zwischen der Kurbelwelle und dem Verbindungsflansch der Nabeneinheit wird vor und hinter der vorgesehenen Fügestelle je ein definierter Spalt eingebracht, der das beim nachfolgenden Verbinden von Kurbelwelle und Verbindungsflansch durch Reibschweißen erweichte Material in seiner Ausbreitung behindert.

Zur Bearbeitung der der Welle zugewandten Bereiche des Nabenteils wird ein gestuftes Werkzeug verwendet, so dass die Innenbearbeitung der Nabe mit Hilfe eines einzigen Werkzeugs in einem einzigen Prozessschritt durchgeführt wird.

Während des Reibschweißens kann das Antriebsrad gekühlt werden, um beispielsweise das Anlassen einer auf dem Antriebsrad vorgesehenen gehärteten Verzahnung während des Reibschweißens zu vermeiden.

## Patentansprüche

1. Fügestellenstruktur eines Welle-/Nabe-Verbundwerkstücks, umfassend eine Welle (1) und einen Verbindungsflansch (2) eines Nabenteils für das Verbinden derselben mittels Reibschweißen,
**dadurch gekennzeichnet,**
- **dass** die Welle (1) oder das Nabenteil in einem Fügebereich (3,3') mit einem radial abragenden Steg (12) versehen ist,
- und **dass** zwischen der Welle (1) und dem Verbindungsflansch (2) des Nabenteils vor und hinter der Fügestelle (3, 3') je ein definierter Spalt (4,4',4") eingebracht ist, der das beim Reibschweißen.erweichte Material in seiner Ausbreitung behindert.

2. Fügestellenstruktur nach Anspruch 1,
**dadurch gekennzeichnet,**
**dass** die Höhe (10,10') des Spalts (4,4') so dimensioniert ist, dass das Verbundwerkstück vor und hinter der Fügestelle (3) eine verbreiterte Bindezone (8) besitzt.

3. Fügestellenstruktur nach Anspruch 2,
**dadurch gekennzeichnet,**
**dass** bei einer Reiblänge von 6 mm und einem Spaltabstand von 1,5 mm die Bindezone (8) eine axiale Erstreckung von 10 mm besitzt.

4. Fügestellenstruktur nach einem der vorhergehenden Ansprüche,
**dadurch gekennzeichnet,**
**dass** das Nabenteil einen zweistufigen Verbindungsflansch (2) besitzt, der keine Hinterschnitte aufweist.

5. Fügestellenstruktur nach einem der vorhergehenden Ansprüche,
**dadurch gekennzeichnet,**
**dass** die Welle (1) Hinterschnitte (9,9',9") aufweist.

6. Fügestellenstruktur nach einem der vorhergehenden Ansprüche,
**dadurch gekennzeichnet,**
**dass** Welle (1) und Nabenteil aus unterschiedlichen Werkstoffen bestehen.

7. Fügestellenstruktur nach einem der vorhergehenden Ansprüche,
**dadurch gekennzeichnet,**
**dass** die zu verbindenden Bauteile (1,2) eine radiale Überdeckung (5) aufweisen, die im Bereich von 1,5 bis 2,5 mm liegt.

8. Verwendung einer Fügestellenstruktur nach einem der vorhergehenden Ansprüche,
**dadurch gekennzeichnet,**
**dass** eine Kurbelwelle mit einem Antriebsrad verbunden wird.

9. Verfahren zum Fügen einer Welle (1), insbesondere einer Kurbelwelle für ein Kraftfahrzeug, mit einem Verbindungsflansch (2) eines Nabenteils eines Antriebsrades,
**dadurch gekennzeichnet,**
- **dass** die Welle (1) oder das Nabenteil in einem Fügebereich (3,3') mit einem radial abragenden Steg (12) versehen wird,
- und **dass** zwischen Welle (1) und Verbindungsflansch (2) vor und hinter einer Fügestelle (3) je ein definierter Spalt (4,4') eingebracht wird, der das beim nachfolgenden Verbinden von Welle (1) und Verbindungsflansch (2) durch Reibschweißen erweichte Material in seiner Ausbreitung behindert,
- wobei die Höhe (10,10') des Spalts (4,4') so dimensioniert wird, dass das Welle-/Nabe-Verbundwerkstück eine Bindezone (8) aufweist, deren effektive Breite (11') größer ist als die Breite (11) des auf der Welle (1) oder dem Nabenteil ursprünglich vorgesehenen Stegs (12).

10. Verfahren nach Anspruch 9,
**dadurch gekennzeichnet,**
**dass** das Antriebsrad während des Reibschweißens gekühlt wird.

11. Verfahren nach Anspruch 9 oder 10,
**dadurch gekennzeichnet,**
**dass** das Nabenteil ohne Hinterschnitte hergestellt wird, und dass die für die Ausbildung eines 2-stufigen Verbindungsflansches (2) notwendigen Hinterschnitte (9, 9', 9") auf der Welle (1) hergestellt werden.

12. Verfahren nach einem der Ansprüche 9 bis 11,
**dadurch gekennzeichnet,**
**dass** ein gestuftes Werkzeug zur Herstellung des Nabenteils verwendet wird, und dass die Innenbearbeitung der Nabe in einem Prozessschritt durchgeführt wird.

## Claims

1. Joint site structure of a shaft/hub composite workpiece, comprising a shaft (1) and a connecting flange (2) of a hub part for joining said workpieces by means of friction welding,
**characterised in that**
- the shaft (1) or the hub part is provided with a radially projecting web (12) in as joint region (3, 3'),
- and **in that** between the shaft (1) and the connecting flange (2) of the hub part, a defined gap (4, 4', 4") each is produced in front and behind the joint site (3, 3') to prevent the spread of the material softened in the friction welding process.

2. Joint site structure according to claim 1,
**characterised in that**
the height (10, 10') of the gap (4, 4') is dimensioned such that the composite workpiece has a widened bonding zone (8) in front and behind the joint site (3).

3. Joint site structure according to claim 2,
**characterised in that**
the bonding zone (8) has an axial dimension of 10 mm at a friction length of 6 mm and a gap distance of 1.5 mm.

4. Joint site structure according to any of the preceding claims,
**characterised in that**
the hub part has a two-step connecting flange (2) without any undercuts.

5. Joint site structure according to any of the preceding claims,
**characterised in that**
the shaft (1) has undercuts (9, 9', 9").

6. Joint site structure according to any of the preceding claims,
**characterised in that**
the shaft (1) and the hub part are made of different materials.

7. Joint site structure according to any of the preceding claims,
**characterised in that**
the components (1, 2) to be joined have a radial overlap (5) lying in the range of 1.5 to 2.5 mm.

8. Use of a joint site structure according to any of the preceding claims, **characterised in that**
a crankshaft is joined to a drive gear.

9. Method for joining a shaft (1), in particular a crankshaft for a motor vehicle, to a connecting flange (2) of a hub part of a drive gear,
**characterised in that**
- the shaft (1) or the hub part is provided with a radially projecting web (12) in a joint region (3, 3'),
- and **in that** between the shaft (1) and the connecting flange (2) of the hub part, a defined gap (4, 4') each is produced in front and behind the joint site (3) to prevent the spread of the material softened in the friction welding process as the shaft (1) is subsequently joined to the connecting flange (2),
- wherein the height (10, 10') of the gap (4, 4') is dimensioned such that the shaft/hub composite workpiece has a bonding zone (8) with an effective width (11') which is greater than the width (11) of the web (12) originally provided on the shaft (1) or on the hub part.

10. Method according to claim 9,
**characterised in that**
the drive gear is cooled during the friction welding process.

11. Method according to claim 9 or 10,
**characterised in that**
the hub part is produced without undercuts and **in that** the undercuts (9, 9', 9") required for producing a two-step connecting flange (2) are produced on the shaft (1).

12. Method according to any of claims 9 to 11,
**characterised in that**
a stepped tool is used for producing the hub part and **in that** the internal machining of the hub is performed in one process step.

## Revendications

1. Structure de site de liaison pour une pièce composite arbre / disque, comprenant un arbre (1) et une bride de liaison (2) d'une partie moyeu pour la jonction de celui-ci à l'aide du soudage par friction, **caractérisée en ce que**
- l'arbre (1) ou la partie moyeu est prévu(e) dans une zone de liaison (3, 3') avec une nervure (12) qui dépasse radialement,
- et un espace défini (4, 4', 4") est ménagé à l'avant et à l'arrière d'un site de liaison (3, 3'), entre l'arbre (1) et la bride de liaison (2) de la partie moyeu, ledit espace empêchant la diffusion de la matière ramollie lors du soudage par friction.

2. Structure de site de liaison selon la revendication 1, **caractérisée en ce que** la hauteur (10, 10') de l'espace (4, 4') est dimensionnée de telle sorte que la pièce de liaison possède à l'avant et à l'arrière du site de liaison (3) une zone de liaison (8) élargie.

3. Structure de site de liaison selon la revendication 2, **caractérisée en ce que** la zone de liaison (8) possède une étendue axiale de 10 mm lorsqu'une longueur de friction est de 6 mm et qu'une distance est de 1,5 mm.

4. Structure de site de liaison selon l'une quelconque des revendications précédentes, **caractérisée en ce que** la partie moyeu possède une bride de liaison (2) à deux étages qui ne présente aucune contre-dépouille.

5. Structure de site de liaison selon l'une quelconque des revendications précédentes, **caractérisée en ce que** l'arbre (1) présente des contre-dépouilles (9, 9', 9").

6. Structure de site de liaison selon l'une quelconque des revendications précédentes, **caractérisée en ce que** l'arbre (1) et la partie moyeu fabriquée sont fabriqués dans différents matériaux.

7. Structure de site de liaison selon l'une quelconque des revendications précédentes, **caractérisée en ce que** les composants (1, 2) devant être reliés présentent un recouvrement (5) radial qui se trouve dans la plage comprise entre 1,5 et 2,5 mm.

8. Utilisation d'une structure de site de liaison selon l'une quelconque des revendications précédentes, **caractérisée en ce qu'**un vilebrequin est relié à une roue motrice.

9. Procédé de liaison d'un arbre (1), en particulier un vilebrequin pour un véhicule, avec une bride de liaison (2) d'une partie moyeu d'une roue motrice, **caractérisé en ce que**
- l'arbre (1) ou la partie moyeu est prévu(e) dans une zone de liaison (3, 3') avec une rainure (12) qui dépasse radialement,
- entre l'arbre (1) et la bride de liaison (2) est placée à l'avant et à l'arrière d'un site de liaison (3) un espace (4, 4') défini qui empêche la diffusion de la matière ramollie lors du soudage par friction lorsque l'arbre (1) et de la bride de liaison (2) sont ensuite reliés.
- la hauteur (10, 10') de l'espace (4, 4') est dimensionnée de telle sorte que la pièce composite arbre / disque présente une zone de liaison (8) dont la largeur effective (11') est supérieure à la largeur (11) de la nervure prévue initialement sur l'arbre (1) ou la partie moyeu.

10. Procédé selon la revendication 9, **caractérisé en ce que** la roue motrice est refroidie pendant le soudage par friction.

11. Procédé selon la revendication 9 ou 10, **caractérisé en ce que** la partie moyeu est fabriquée sans contre-dépouille et **en ce que** les contre-dépouilles (9, 9', 9") nécessaires à la formation d'une bride de liaison (2) à deux étages sont construites sur l'arbre (1).

12. Procédé selon l'une quelconque des revendications 9 à 11, **caractérisé en ce qu'**un outil étagé pour la fabrication du moyeu est utilisé et **en ce que** l'usinage intérieur du moyeu est effectué lors d'une étape du processus.
